(19) Europäisches Patentamt
European Patent Office
Office européen des brevets

(11) Veröffentlichungsnummer: **0 208 110**
**A1**

(12) # EUROPÄISCHE PATENTANMELDUNG

(21) Anmeldenummer: 86107155.3

(22) Anmeldetag: 27.05.86

(51) Int.Cl.[4]: **A 01 N 41/10**

(30) Priorität: 08.06.85 DE 3520618

(43) Veröffentlichungstag der Anmeldung: 14.01.87 Patentblatt 87/3

(84) Benannte Vertragsstaaten: AT BE CH DE FR GB IT LI NL SE

(71) Anmelder: BAYER AG
Konzernverwaltung RP Patentabteilung
D-5090 Leverkusen 1 Bayerwerk(DE)

(72) Erfinder: Fest, Christa, Dr.
Johannistal 20
D-5600 Wuppertal 1(DE)

(72) Erfinder: Brandes, Wilhelm, Dr.
Eichendorffstrasse 3
D-5653 Leichlingen(DE)

(72) Erfinder: Hänssler, Gerd, Dr.
Am Arenzberg 58a
D-5090 Leverkusen 3(DE)

(72) Erfinder: Reinecke, Paul, Dr.
Steinstrasse 8
D-5090 Leverkusen 3(DE)

(54) **Fungizide Mittel auf Benzaldoxim-Derivat-Basis.**

(57) Die Erfindung betrifft die Verwendung des bekannten α-(4-Methyl-phenylsulfonyl)-2, 6-dichlor-benzaldoxims der Formel (I).

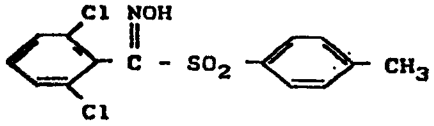

(I)

oder des Ammoniumsalzes als Fungizide.

EP 0 208 110 A1

0208110

BAYER AKTIENGESELLSCHAFT 5090 Leverkusen, Bayerwerk
Konzernverwaltung RP
Patentabteilung Bas/Kü-c
IIa

Fungizide Mittel auf Benzaldoxim-Derivat-Basis

Die vorliegende Erfindung betrifft die Verwendung des bekannten α-(4-Methyl-phenylsulfonyl)-2,6-dichlor-benzaldoxims als Fungizid.

Das α-(4-Methyl-phenylsulfonyl)-2,6-dichlor-benzaldoxim ist z.B. als Zwischenprodukt zur Herstellung von α-Arylsulfonylphenyl-diazomethan-Derivaten beschrieben (vgl. Chem. Abstracts 83:27759e = Tetrahedron 1975, 31 (6), S. 597-600) oder es ist z.B. bekannt aus Elektronenspinnresonanz-Messungen von α-Sulfonyl-iminoxid-Radikalen (vgl. Tetrahedron 1973, 29(24), S. 4299-4302). Eine Wirkung auf dem Pflanzenschutzgebiet ist nicht bekannt.

Weiterhin ist bekannt, daß bestimmte Benzaldoxim-Derivate pestizide Eigenschaften, vor allem herbizide und auch fungizide Eigenschaften, aufweisen. So ist z.B. das α-Phenyl-sulfonyl-2,6-dichlor-benzaldoxim bekannt (vgl. Schweizer Patentschrift 423.350).

Weiterhin sind bestimmte organische Schwefelverbindungen, wie z.B. das Zinkethylen-1,2-bis-(dithocarbamat), mit guten fungiziden Wirkungen bekannt (vgl. z.B. R. Wegler, "Chemie der Pflanzenschutz- und Schädlingsbekämpfungsmittel", Springer-Verlag Berlin-Heidelberg-New-York, 1970, Bd. 2, S. 65 ff).

Bei diesen Verbindungen kann unter bestimmten Umständen, z.B. bei niedrigen Anwendungskonzentrationen, die Wirkung nicht immer voll befriedigend sein.

Es wurde gefunden, daß das α-(4-Methyl-phenylsulfonyl)-2,6-dichlor-benzaldoxim der Formel (I)

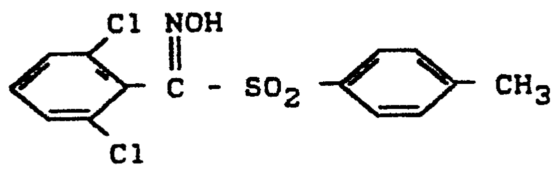

(I)

starke fungizide Eigenschaften aufweist.

Die Verbindung der Formel (I) kann als syn- oder anti-Isomeres oder als deren Gemische in unterschiedlicher Zusammensetzung anfallen. Die Erfindung bezieht sich sowohl auf die reinen Isomeren als auch auf die Isomerengemische.

Überraschenderweise zeigt das α-(4-Methyl-phenylsulfonyl)-2,6-dichlor-benzaldoxim eine erhebliche höhere fungizide Wirkung als die aus dem Stand der Technik bekannten Verbindungen, das α-Phenylsulfonyl-2,6-dichlor-benzaldoxim und das Zinkethylen-1,2-bis-(dithiocarbamat), welche chemisch und/oder wirkungsmäßig naheliegende Verbindungen sind.

Das bekannte α-(4-Methyl-phenylsulfonyl)-2,6-dichlor-benzaldoxim ist durch die Formel (I) beschrieben und kann nach Analogieverfahren hergestellt werden, z.B. aus α-Chlor-2,6-dichlorbenzaldoxim und 4-Methylphenylsulfinsaurem Natrium gegebenenfalls in Gegenwart eines Lösungsmittels, wie Methanol, bei erhöhter Temperatur (vgl. Schweizer Patentschrift 423 350).

Der erfindungsgemäß verwendbare Wirkstoff weist eine starke fungizide Wirkung auf und kann zur Bekämpfung von unerwünschten Mikroorganismen praktisch eingesetzt werden. Der Wirkstoff ist für den Gebrauch als Pflanzenschutzmittel geeignet.

Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Beispielhaft aber nicht begrenzend seien einige Erreger von pilzlichen Erkrankungen, die unter die oben aufgezählten Oberbegriffe fallen, genannt:

Pythium-Arten, wie beispielsweise Pythium ultimum;
Phytophthora-Arten, wie beispielsweise Phytophthora infestans;
Pseudoperonospora-Arten, wie beispielsweise Pseudoperonospora humuli oder Pseudoperonospora cubense;
Plasmopara-Arten, wie beispielsweise Plasmopara viticola;
Peronospora-Arten, wie beispielsweise Peronospora pisi oder P. brassicae;
Erysiphe-Arten, wie beispielsweise Erysiphe graminis;
Sphaerotheca-Arten, wie beispielsweise Sphaerotheca fuliginea;
Podosphaera-Arten, wie beispielsweise Podosphaera leucotricha;
Venturia-Arten, wie beispielsweise Venturia inaequalis;
Pyrenophora-Arten, wie beispielsweise Pyrenophora teres oder P. graminea;
(Konidienform: Drechslera, Syn: Helminthosporium);
Cochliobolus-Arten, wie beispielsweise Cochliobolus sativus;
(Konidienform: Drechslera, Syn: Helminthosporium);
Uromyces-Arten, wie beispielsweise Uromyces appendiculatus;
Puccinia-Arten, wie beispielsweise Puccinia recondita;
Tilletia-Arten, wie beispielsweise Tilletia caries;
Ustilago-Arten, wie beispielsweise Ustilago nuda oder Ustilago avenae;
Pellicularia-Arten, wie beispielsweise Pellicularia sasakii;
Pyricularia-Arten, wie beispielsweise Pyricularia oryzae;
Fusarium-Arten, wie beispielsweise Fusarium culmorum;
Botrytis-Arten, wie beispielsweise Botrytis cinerea;
Septoria-Arten, wie beispielsweise Septoria nodorum;
Leptosphaeria-Arten, wie beispielsweise Leptosphaeria nodorum;

Cercospora-Arten, wie beispielsweise Cercospora canescens; Alternaria-Arten, wie beispielsweise Alternaria brassicae; Pseudocercosporella-Arten, wie beispielseise Pseudocercosporella herpotrichoides.

Die gute Pflanzenverträglichkeit des Wirkstoffs in den zur Bekämpfung von Pflanzenkrankheiten notwendigen Konzentrationen erlaubt eine Behandlung von oberirdischen Pflanzenteilen, von Pflanz- und Saatgut, und des Bodens.

Dabei läßt sich der erfindungsgemäß verwendbare Wirkstoff mit besonders gutem Erfolg zur Bekämpfung von Gemüsekrankheiten, verursacht z. B. durch Phytophthora infestans an der Tomate und Botrytis cinerea an Bohnen, einsetzen. Ebenso zur Bekämpfung von Reiskrankheiten, verursacht durch Pyricularia oryzae und zur Bekämpfung von Getreidekrankheiten, verursacht z.B. durch Leptosphaeria nodorum, Rost, Cochliobolus sativus und Pyrenophora teres.

Der Wirkstoff kann in die üblichen Formulierungen übergeführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen des Wirkstoffs mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen,

Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Der erfindungsgemäß verwendbare Wirkstoff kann in den Formulierungen in Mischung mit anderen bekannten Wirkstoffen vorliegen, wie Fungizide, Insektizide, Akarizide und Herbizide, sowie in Mischungen mit Düngemitteln und Wachstumsregulatoren.

Der Wirkstoff kann als solcher, in Form seiner Formulierungen oder den daraus bereiteten Anwendungsformen, wie gebrauchsfertige Lösungen, emulgierbare Konzentrate, Emulsionen, Schäume, Suspensionen, Spritzpulver, Pasten, lösliche Pulver, Stäubemittel und Granulate, angewendet werden. Die Anwendung geschieht in üblicher Weise, z.B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Bei der Behandlung von Pflanzenteilen kann die Wirkstoffkonzentration in den Anwendungsformen in einem größeren Bereich variiert werden. Sie liegt im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,01 bis 10 g, benötigt.

Bei Behandlung des Bodens sind Wirkstoffkonzentrationen von 0,00001 bis 0,1 Gew.-%, vorzugsweise von 0,0001 bis 0,02 %, am Wirkungsort erforderlich.

## Anwendungsbeispiele

In den folgenden Anwendungsbeispielen werden die nachfolgend aufgeführten Verbindungen als Vergleichssubstanzen eingesetzt:

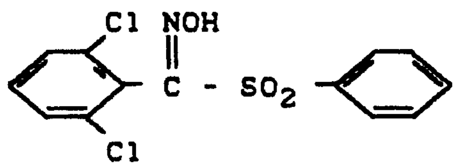

(A)

α-Phenylsulfonyl-2,6-dichlor-benzaldoxim (bekannt aus CH-PA 423.350) und

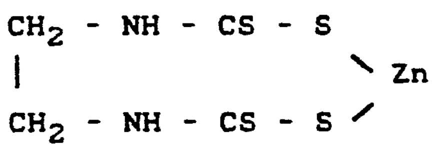

(B)

Zinkethylen-1,2-bis-(dithiocarbamat) (bekannt R. Wegler, "Chemie der Pflanzenschutz- und Schädlingsbekämpfungsmittel", Springer-Verlag Berlin-Heidelberg-New-York, 1970, Bd. 2, S. 65 ff).

## Beispiel A

Phytophthora-Test (Tomate) / protektiv

Lösungsmittel: 4,7 Gewichtsteile Aceton
Emulgator: 0,3 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden die Pflanzen mit einer wäßrigen Sporensuspension von Phytophthora infestans inokuliert.

Die Pflanzen werden in einer Inkubationskabine mit 100 % relativer Luftfeuchtigkeit und ca. 20°C aufgestellt.

3 Tage nach der Inkoulation erfolgt die Auswertung.

Eine deutliche Überlegenheit in der Wirksamkeit gegenüber dem Stand der Technik zeigt in diesem Test die erfindungsgemäß verwendbare Verbindung:

## Tabelle A

Phytophthora-Test (Tomate) / protektiv

| Wirkstoff | Befall in % bei einer Wirkstoffkonzentration von 25 ppm |
|---|---|
| Bekannt: | |
| 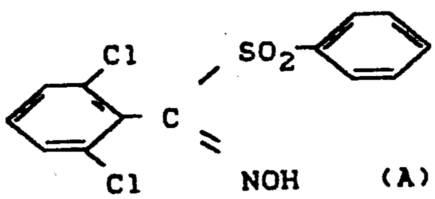 (A) | 52 |
| Erfindungsgemäß: | |
| 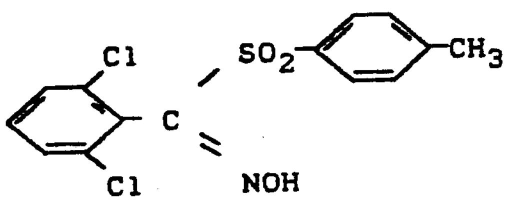 | 18 |

**Beispiel B**

Botrytis-Test (Bohne) / protektiv

Lösungsmittel: 4,7 Gewichtsteile Aceton
Emulgator: 0,3 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Wasser auf die gewünschte Konzentration.

Zur Prüfung auf protektive Wirksamkeit bespritzt man junge Pflanzen mit der Wirkstoffzubereitung bis zur Tropfnässe. Nach Antrocknen des Spritzbelages werden auf jedes Blatt 2 kleine mit Botrytis cinerea bewachsene Agarstückchen aufgelegt. Die inokulierten Pflanzen werden in einer abgedunkelten, feuchten Kammer bei 20°C aufgestellt. 3 Tage nach der Inokulation wird die Größe der Befallsflecken auf den Blättern ausgewertet.

Eine deutliche Überlegenheit in der Wirksamkeit gegenüber dem Stand der Technik zeigt in diesem Test die erfindungsgemäß verwendbare Verbindung.

## T a b e l l e B

Botrytis-Test (Bohne) / protektiv

| Wirkstoff | Befall in % bei einer Wirkstoffkonzentration von 100 ppm |
|---|---|
| **Bekannt:** | |
| 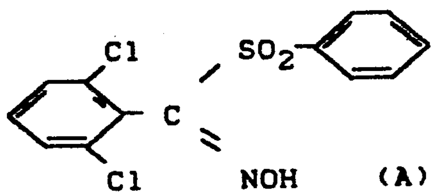 (A) | 46 |
| **Erfindungsgemäß:** | |
| 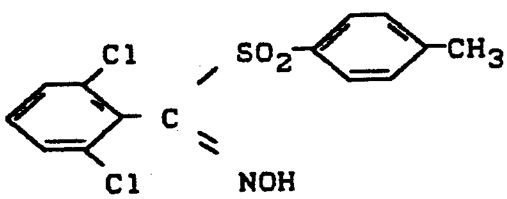 | 6 |

0208110

## Beispiel C

Pyricularia-Test (Reis) / protektiv

Lösungsmittel: 12,5 Gewichtsteile Aceton
Emulgator: 0,3 Gewichtsteile Alkylarylpolyglykolether

Zur Herstellung einer zweckmäßigen Wirkstoffzubereitung vermischt man 1 Gewichtsteil Wirkstoff mit der angegebenen Menge Lösungsmittel und verdünnt das Konzentrat mit Wasser und der angegebenen Menge Emulgator auf die gewünschte Konzentration.

Zur Prüfung auf protektive Wirksamkeit bespritzt man junge Reispflanzen mit der Wirkstoffzubereitung bis zur Tropfnässe. Nach dem Abtrocknen des Spritzbelages werden die Pflanzen mit einer wäßrigen Sporensuspension von Pyricularia oryzae inokuliert. Anschließend werden die Pflanzen in einem Gewächshaus bei 100 % rel. Luftfeuchtigkeit und 25°C aufgestellt.

4 Tage nach der Inokulation erfolgt die Auswertung des Krankheitsbefalls.

Eine deutliche Überlegenheit in der Wirksamkeit gegenüber dem Stand der Technik zeigt in diesem Test die erfindungsgemäß verwendbare Verbindung.

## Tabelle C

Pyricularia-Test (Reis) / protektiv

| Wirkstoffe | Wirkstoffkonzentration in % | Krankheitsbefall in % der unbehandelten Kontrolle |
|---|---|---|
| **Bekannt:** | | |
| 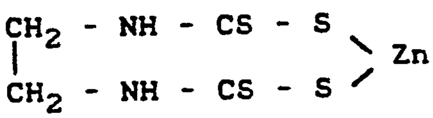 (B) | 0,025 | 75 |
| **Erfindungsgemäß:** | | |
| 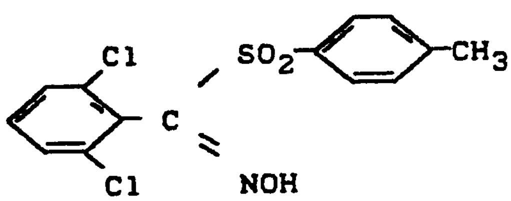 | 0,025 | 0 |

**Beispiel D**

Leptosphaeria nodorum-Test (Weizen) / protektiv

Lösungsmittel: 100 Gewichtsteile Dimethylformamid
Emulgagor: 0,25 Gewichtsteile Alkylarylpolyglykolether

Zur Herstellung einer zweckmäßigen Wirkstoffzubereitung vermischt man 1 Gewichtsteil Wirkstoff mit den angegebenen Mengen Lösungsmittel und Emulgator und verdünnt das Konzentrat mit Waser auf die gewünschte Konzentration.

Zur Prüfung auf protektive Wirksamkeit besprüht man junge Pflanzen mit der Wirkstoffzubereitung taufeucht. Nach Antrocknen des Spritzbelages werden die Pflanzen mit einer Konidiensuspenion von Leptosphaeria nodorum besprüht. Die Pflanzen verbleiben 48 Stunden bei 20°C und 100 % relativer Luftfeuchtigkeit in einer Inkubationskabine.

Die Pflanzen werden in einem Gewächshaus bei einer Temperatur von ca. 15°C und einer relativen Luftfeuchtigkeit von ca. 80 % aufgestellt.

10 Tage nach der Inokulation erfolgt die Auswertung:

Eine deutliche Überlegenheit in der Wirksamkeit gegenüber dem Stand der Technik zeigt bei diesem Test die erfindungsgemäß verwendbare Verbindung.

Tabelle D

Leptosphaeria nodorum-Test (Weizen) / protektiv /

| Wirkstoffe | Wirkstoffkonzentration in der Spritzbrühe in Gew.-% | Krankheitsbefall in % der unbehandelten Kontrolle |
|---|---|---|
| **Bekannt:** | | |
| 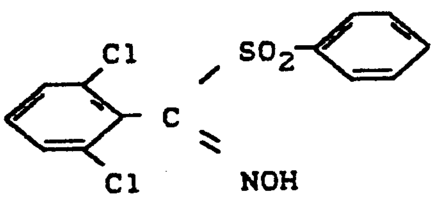 (A) | 0,025 | 100 |
| **Erfindungsgemäß:** | | |
| 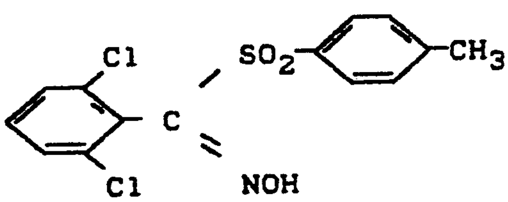 | 0,025 | 0,0 |

**Herstellungsbeispel**

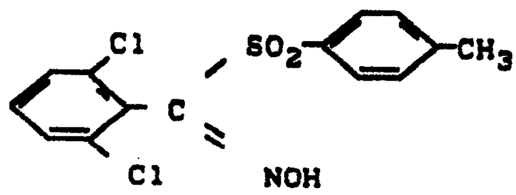

100 g (0,445 m) α,2,6-Trichlorbenzaldoxim (erhalten durch Chlorierung von 2,6-Dichlorbenzaldoxim nach Houben-Weyl VIII, 691 oder Org. Synth. Coll. Vol. V, 504 (1973)) werden in 300 ml Methanol gelöst und bei Raumtemperatur mit 91 g (0,445 m + 7 % Überschuß) 4-Methyl-phenyl-sulfinsaurem Natrium versetzt.

Die Reaktion verläuft schwach exotherm. Man läßt das Reaktionsgemisch über Nacht bei Raumtemperatur rühren, läßt es dann in ca. 2 l Wasser einlaufen und rührt aus. Nach dem Absaugen wird gewaschen und getrocknet. Das Reaktionsprodukt wurde aus Isopropanol umkristallisiert.

Man erhält 77 g (48 % der Theorie) an gewünschter Substanz mit dem Schmelzpunkt 182°C. Nach Dünnschichtchromatogramm und NMR-Spektrum ist die Verbindung genügend rein.

**Patentansprüche**

1. Fungizides Mittel, gekennzeichnet durch einen Gehalt an α-(4-Methyl-phenylsulfonyl)-2,6-dichlor-benzaldoxim der Formel (I)

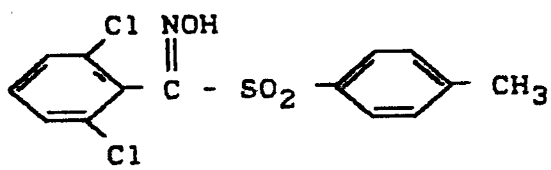 (I).

2. Verfahren zur Bekämpfung von Pilzen, dadurch gekennzeichnet, daß man α-(4-Methyl-phenylsulfonyl)-2,6-dichlorbenzaldoxim der Formel (I) auf Pilze und/oder ihren Lebensraum einwirken läßt.

3. Verwendung von α-(4-Methyl-phenylsulfonyl)-2,6-dichlor-benzaldoxim der Formel (I) zur Bekämpfung von Pilzen.

4. Verfahren zur Herstellung von fungiziden Mitteln, dadurch gekennzeichnet, daß man α-(4-Methyl-phenylsulfonyl)-2,6-dichlorbenzaldoxim der Formel (I) mit Streckmitteln und/oder oberflächenaktiven Mitteln vermischt.

Europäisches Patentamt

# EUROPÄISCHER RECHERCHENBERICHT

0208110

Nummer der Anmeldung

EP 86 10 7155

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A,D | CH-A- 423 350 (SHELL RESEARCH)<br>----- | 1-4 | A 01 N 41/10 |
| | | | RECHERCHIERTE SACHGEBIETE (Int. Cl.4) |
| | | | A 01 N |

Der vorliegende Recherchenbericht wurde für alle Patentansprüche erstellt.

| Recherchenort | Abschlußdatum der Recherche | Prüfer |
|---|---|---|
| DEN HAAG | 29-09-1986 | DECORTE D. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82